(19) Europäisches Patentamt
European Patent Office
Office européen des brevets

(11) **EP 3 498 559 B1**

(12) **EUROPEAN PATENT SPECIFICATION**

(45) Date of publication and mention
of the grant of the patent:
**16.09.2020 Bulletin 2020/38**

(51) Int Cl.:
***B60W 40/09*** *(2012.01)*   *B60W 50/00* *(2006.01)*

(21) Application number: **18210037.0**

(22) Date of filing: **04.12.2018**

(54) **METHOD FOR RECOGNIZING THE DRIVING STYLE OF A DRIVER OF A LAND VEHICLE, AND CORRESPONDING APPARATUS**

VERFAHREN ZUM ERKENNEN DER FAHRWEISE EINES FAHRERS EINES LANDFAHRZEUGS UND ENTSPRECHENDE VORRICHTUNG

PROCEDE DE RECONNAISSANCE DU STYLE DE CONDUITE D'UN CONDUCTEUR D'UN VEHICULE TERRESTRE, ET APPAREIL CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2017 IT 201700144561**

(43) Date of publication of application:
**19.06.2019 Bulletin 2019/25**

(73) Proprietor: **Marelli Europe S.p.A.**
**20011 Corbetta (MI) (IT)**

(72) Inventors:
• **ARMENI, Saverio**
**I-20011 Corbetta (Milano) (IT)**
• **NESCI, Walter**
**I-20011 Corbetta (Milano) (IT)**
• **D'AMATO, Antonio**
**I-84126 Salerno (IT)**
• **PIANESE, Cesare**
**I-84100 Salerno (IT)**
• **ARSIE, Ivan**
**I-84095 Giffoni Valle Piana (Salerno) (IT)**

(74) Representative: **Crovini, Giorgio**
**Buzzi, Notaro & Antonielli d'Oulx S.p.A.**
**Corso Vittorio Emanuele II, 6**
**10123 Torino (IT)**

(56) References cited:
**US-A1- 2010 023 223   US-A1- 2017 088 128**

• **ENGELBRECHT J ET AL: "Performance Comparison of Dynamic Time Warping (DTW) and a Maximum Likelihood (ML) Classifier in Measuring Driver Behavior with Smartphones", 2015 IEEE SYMPOSIUM SERIES ON COMPUTATIONAL INTELLIGENCE, IEEE, 7 December 2015 (2015-12-07), pages 427-433, XP032843084, DOI: 10.1109/SSCI.2015.70 ISBN: 978-1-4799-7560-0 [retrieved on 2016-01-07]**
• **AYA HAMDY ALI ET AL: "Recognizing Driving Behavior and Road Anomaly using Smartphone Sensors :", INTERNATIONAL JOURNAL OF AMBIENT COMPUTING AND INTELLIGENCE, vol. 8, no. 3, 1 July 2017 (2017-07-01), pages 22-37, XP055499482, US ISSN: 1941-6237, DOI: 10.4018/IJACI.2017070102**

**Description**

The present invention relates to techniques for recognizing the driving style of a driver of a land vehicle on the basis of information on the dynamics of the land vehicle, of the type that envisages acquiring information on the dynamics of the vehicle from sensors and calculating, as a function of said information on the dynamics of the vehicle, a class of membership of the driving style of the driver.

Recognition of the driving style can lead to a reduction in fuel consumption and an increase in road safety, by identifying any potentially dangerous behaviour, in so far as the information on the driving style can be used by the electronic systems on board the vehicle in order to optimize consumption levels and performance of the vehicle itself. It can moreover be used as basic element in implementation of more complex systems for evaluation of the driver in the perspective of fleet management (for example, for applications in car sharing, insurance, etc.).

Document US 2017/088128 A1 discloses a driving support device which includes a processing device that performs driving support by controlling in-vehicle equipment having an influence on running of a subject vehicle equipped with the driving support device.

Document US 2010/023223 A1 discloses and adaptive vehicle control system that classifies a driver's driving style based on characteristic curve-handling maneuvers and road and traffic conditions.

The publication by Engelbrecht et al., "Performance Comparison of Dynamic Time Warping (DTW) and a Maximum Likelihood (ML) Classifier in Measuring Driver Behavior with Smartphones", 2015 IEEE SYMPOSIUM SERIES ON COMPUTATIONAL INTELLIGENCE, IEEE,, pages 427 - 433, discloses a Maximum Likelihood (ML) classifier to identify and classify the recklessness of driving maneuvers using the embedded sensors and GPS receiver of a smartphone.

The publication by Aya Hamdy et al., "Recognizing Driving Behavior and Road Anomaly using Smartphone Sensors", INTERNATIONAL JOURNAL OF AMBIENT COMPUTING AND INTELLIGENCE, US, (20170701), vol. 8, no. 3, pages 22 - 37 discloses a recognition method for driving events detecting and classifiying both driving behaviors and road anomalies patterns based on smartphone sensors (accelerometer and gyroscope). k-Nearest Neighbor and Dynamic Time Warping algorithms are utilized for method evaluation.

The object of the present invention is to provide an improved method that will enable recognition of the driving style (profiling of the driver) on the basis of the information on the dynamics of the vehicle and reconstruction of the manoeuvre performed.

According to the present invention, the aforesaid object is achieved thanks to a method for recognizing the driving style, as well as to a corresponding apparatus having the characteristics recalled specifically in the ensuing claims.

The invention will be described with reference to the annexed drawings, which are provided purely by way of non-limiting example and in which:

- Figure 1 is a schematic view of a scenario of application of the method described herein;
- Figure 2 shows a principle block diagram of an apparatus that implements the method described herein;
- Figure 3 shows a diagram representing quantities used by the method described herein;
- Figure 4 shows a more detailed block diagram of the implementation of Figure 2 of the method described herein;
- Figure 5 is a flowchart representing an embodiment of the method described herein;
- Figures 6, 7, 8, and 9 are diagrams representing quantities used in the operations of the method of Figure 5;
- Figure 10 is a flowchart representing a further procedure associated to the method described herein; and
- Figures 11 and 12 are diagrams representing quantities used in the operations of the method of Figure 10.

In brief, the solution according to the invention regards a method for recognizing the driving style of a driver of a land vehicle, of the type that envisages acquiring information on the dynamics of the vehicle from sensors, for example lateral and longitudinal accelerations of the vehicle, as well as yaw and longitudinal velocity, and calculating, as a function of said information on the dynamics of the vehicle, a class of membership of the driving style of the driver, for example comfortable or relaxed driving style, normal driving style, or sporting driving style, where it is envisaged to:

- analyse the information on the dynamics of the vehicle in order to identify the start of a manoeuvre-recognition event and to start a procedure for recognizing the event, which comprises:

  - reconstructing a manoeuvre performed by the driver by computing components of displacement of the vehicle as a function of the information on the dynamics of the vehicle, said components of displacement being then arranged in a displacement time series; and
  - identifying the manoeuvre performed, in particular by applying an operation of alignment of the samples, in particular a Dynamic-Time-Warping procedure, to the displacement time series and comparing the time series aligned with templates, i.e., models, of time series corresponding to given manoeuvres stored in a database;

- defining regions in a cartesian plane having as axes a lateral acceleration and a longitudinal acceleration, in particular manifolds; these manifolds are used for characterization of the driving style of the driver; in addition, their definition may take into account the particular manoeuvre performed and/or the conditions of the road, such as rain, snow, etc. (the road conditions will be detected by appropriate external sensors, if available);
- computing cost functionals for the three driving styles, which calculate the distance from the acceleration point and the boundary of the three regions; and
- recognising the driving style, on the basis of the values assumed by said cost functionals.

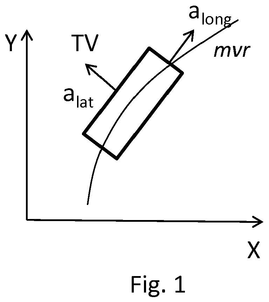

In this connection, Figure 1 is a schematic illustration of a scenario of application of the method described herein, and specifically shows a land vehicle TV, for example a motor vehicle, which follows a path in a cartesian plane XY, the path corresponding to a manoeuvre $mvr$ of the vehicle TV. The land vehicle TV is subjected to a longitudinal acceleration $a_{long}$ along its own longitudinal axis and to a lateral acceleration $a_{lat}$ along the transverse axis perpendicular to the longitudinal axis.

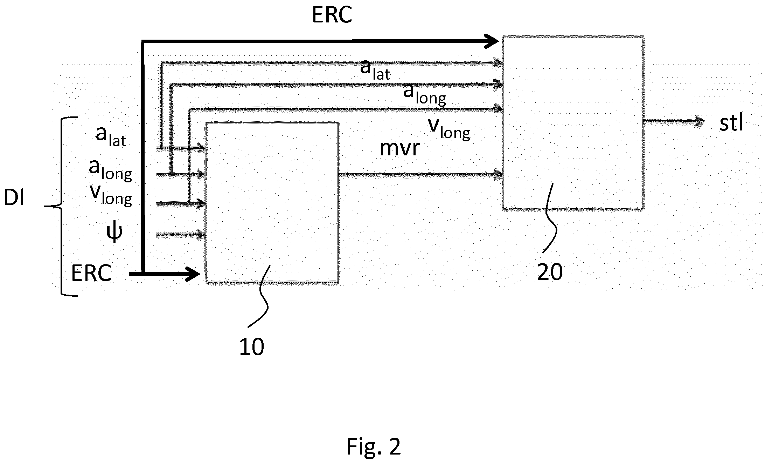

Figure 2 is a schematic illustration of a principle block diagram of an apparatus that implements the method for recognizing the driving style $stl$ associated to the manoeuvre $mvr$ described here. The method comprises two main operations:

- an operation of manoeuvre detection and identification, implemented in the block or module 10;
- an operation of recognition of the driving style, implemented in the block or module 20.

The blocks 10 and 20 correspond, for example, to processor modules (possibly implemented via one and the same processor) that implement the aforesaid operations. The apparatus that implements the method described herein hence comprises one or more microprocessor modules.

The block 10 follows the above operation of manoeuvre detection and identification on the basis of information DI on the dynamics of the vehicle, which, in the example described, also comprises information ERC on the road condition or external environment, detected by corresponding direct or indirect sensors arranged in the vehicle TV, but not shown in the figures.

Figure 2 shows a block diagram in which at input to block 10 is the aforesaid information DI on the dynamics of the vehicle, comprising the longitudinal velocity $v_{long}$, the longitudinal acceleration $a_{long}$, the lateral acceleration $a_{lat}$, the angle of yaw $\psi$, and the road and/or environmental condition ERC. The longitudinal velocity $v_{long}$, the longitudinal acceleration $a_{long}$, the lateral acceleration $a_{lat}$, and the road and/or environmental condition ERC are supplied at input also to block 20, jointly with a recognized type of manoeuvre $mvr$ computed by block 10 on the basis of the aforementioned inputs. Block 20 then supplies at output a driving style $stl$.

Block 10 configured for carrying out detection and identification of the manoeuvre is in particular configured, as specified more fully in what follows, for detecting the start and/or end of an event corresponding to a manoeuvre defined *a priori* or successive combinations of standard manoeuvres such as:

- curving to the left;
- curving to the right;
- lane changing to the left;
- lane changing to the right;
- double lane changing (to the left/right);
- U-turn;
- acceleration;
- braking.

Once the start of a new manoeuvre has been recognized, through a technique of Dynamic Time Warping, it is envisaged, once again in block 10, to carry out a search for the manoeuvre on the basis of the data of longitudinal velocity $v_{long}$, longitudinal acceleration $a_{long}$, lateral acceleration $a_{lat}$, and the road and/or environmental condition ERC within a database containing the information corresponding to the standard manoeuvres, such as the ones listed above, in the form of templates or models tp, as described more fully in what follows.

Dynamic Time Warping, which is in itself known to the person skilled in the sector, is in general an algorithm that has the purpose of carrying out alignment between two sequences, in particular of processing sequences in which individual components have characteristics that vary over time (for example, these are sequences of displacement data corresponding to manoeuvres performed at different velocities of displacement) and that can enable a measurement of distance between the two sequences. Hence, in the case described herein, the algorithm enables determination of the correspondence of the manoeuvre acquired with a model of manoeuvre stored in the database irrespective of the speed of execution or form of the manoeuvre itself; for example, a change of two lanes is always identified as one lane change.

Once the type of manoeuvre *mvr* has been recognized, as has been said, the data of the dynamics of the vehicle, i.e., the longitudinal velocity $v_{long}$, the longitudinal acceleration $a_{long}$, the lateral acceleration $a_{lat}$, and the road and/or environmental condition ERC are used by block 20, which implements the operation of driving-style recognition 20.

For this purpose, the module 20 comprises, stored therein, an analytical description of driving styles *stl,* defined through classes of driving style, for example three classes CL:

- comfortable or relaxed driving style CL1;
- normal driving style CL2; and
- sporting driving style CL3.

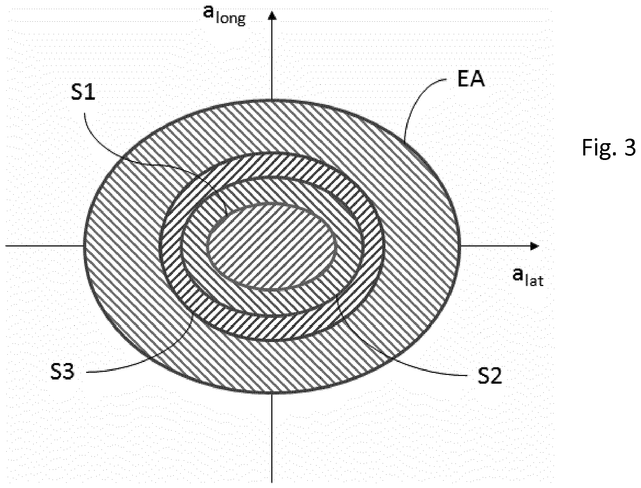

The operation of driving-style recognition 20 makes use of the inputs indicated above as regards information DI on the dynamics, in particular the accelerations and velocities, and as regards the type of manoeuvre *mvr* identified, and envisages determining the driving style *stl* on the basis of the location, during the manoeuvre, of the values of longitudinal acceleration $a_{long}$ and lateral acceleration $a_{lat}$, which, for example, are acquired by the corresponding sensors at a given acquisition rate, for example, every 10 ms, in a diagram of a G-G type such as the one shown in Figure 3, where the axis of the ordinates corresponds to the longitudinal acceleration $a_{long}$ and the axis of the abscissae corresponds to the lateral acceleration $a_{lat}$, within a given surface of the G-G plane. For example if, for a given manoeuvre *mvr* and for a given longitudinal velocity $v_{long}$ of the vehicle TV, comprised in a range between a minimum value $v_{longmin}$ and a maximum value $v_{longmax}$ and, in the example described, also for a given road and/or environmental condition ERC, the values of lateral and longitudinal acceleration acquired during the manoeuvre *mvr* identify points that fall within a region S1, which in the example is the region around the origin of the G-G plane distinguished by the lowest values of longitudinal and lateral acceleration, the driving style *stl* is identified as belonging to class CL1, relaxed driving style. A second region S2, which in Figure 3 surrounds entirely the region S1, corresponds to class CL2, normal driving style. The outermost region S3, which in turn englobes the region S2 and corresponds to the highest values of acceleration, corresponds to class CL3, sporting driving style. The outermost ellipse identifies the ellipse of adherence EA.

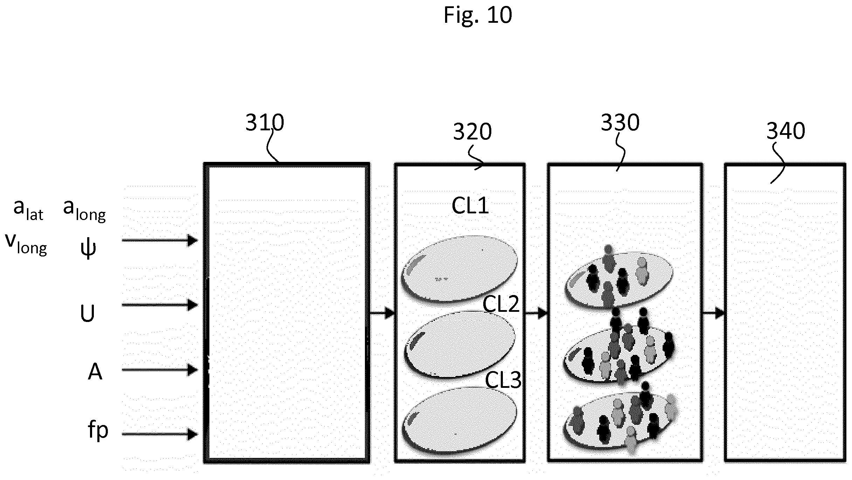

The regions or surfaces S1, S2, S3, which are defined with a definition process described in what follows, are manifolds, or topology varieties of dimension 2, and are defined, for example, on the basis of the results obtained by the strategy of characterization of the driving styles 300 provided in what follows with reference to Figure 10. These regions are, in any case, always defined within the ellipse of adherence EA defined by Eqs. (8)-(11) below. Excessive accelerations may cause poor controllability of the vehicle and conditions of unsafe driving. Hence, the method proposed envisages determination of the maximum value of the modulus of the acceleration such that the driving conditions remain safe, i.e., such that the accelerations of the vehicle remain within a so-called ellipse of adherence. On the basis of the aforesaid value of maximum acceleration that guarantees adherence, it is envisaged to estimate the maximum accelerations at each time instant, determining maximum values of accelerations and hence the limits of the surfaces of the manifolds, which are variable as a function of the current vehicle velocity.

In order to identify the driving style *stl,* the method proposed defines cost functionals, designated by *J,* to determine the membership of the accelerations on the G-G diagram to the manifold S1, S2, S3 corresponding to each style, in particular comfortable or relaxed driving style, normal driving style, or sporting driving style. The cost functional J from among these that has the lowest value identifies the manifold closest to the distribution of the accelerations for a given manoeuvre *mvr* being recognized, and hence the driving style with which the driver has performed the manoeuvre *mvr.*

By means of these approaches, the method described herein is able to provide information on the manoeuvres made by the vehicle TV and on how these manoeuvres are performed by the driver.

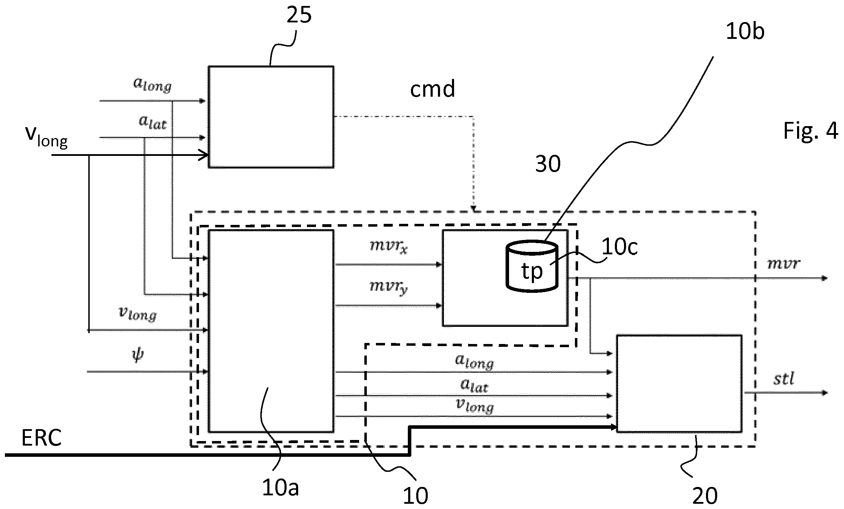

To come now to a more detailed description, Figure 4 provides a diagram that is more detailed than that of Figure 2, of an apparatus that implements the method described.

As may be noted, the apparatus comprises a module 25 for recognition of start and end of a manoeuvre-recognition event in order to establish the manoeuvre *mvr* and the style *stl* corresponding to the event.

The above module 25 receives at input the lateral acceleration $a_{lat}$ and the longitudinal acceleration $a_{long}$ and the longitudinal velocity $v_{long}$ and issues an activation/de-activation command cmd to an event-recognition block, which comprises the manoeuvre-detection-and-identification module 10 and the driving-style-recognition module 20. The manoeuvre-detection-and-identification module 10 in turn comprises a manoeuvre-reconstruction module 10a, which receives the longitudinal velocity $v_{long}$, the longitudinal acceleration $a_{long}$, the lateral acceleration $a_{lat}$, and the angle of yaw $\psi$ and produces at output a horizontal-component time series $mvr_x$ and a vertical-component time series $mvr_y$ of the manoeuvre *mvr* being recognized, i.e., the manoeuvre that has triggered the event recognized by block 25 and activation of block 30, computed as described more fully in what follows, which represents the input of a submodule 10b configured for identifying the manoeuvre *mvr* via Dynamic Time Warping and supplying it to the driving-style-recognition module 20.

The method described, i.e., for example, in particular the operations implemented by the modules 10, 20, 25, can be implemented in a control unit of the vehicle, i.e., in a microprocessor module of the vehicle, or else in a computer terminal, such as an Android smartphone or tablet, provided with triaxial accelerometer and GPS position detector. The method can exploit data on accelerations, velocities, and attitude coming from the vehicle INS (Inertial Navigation System) platform or from the smartphone itself.

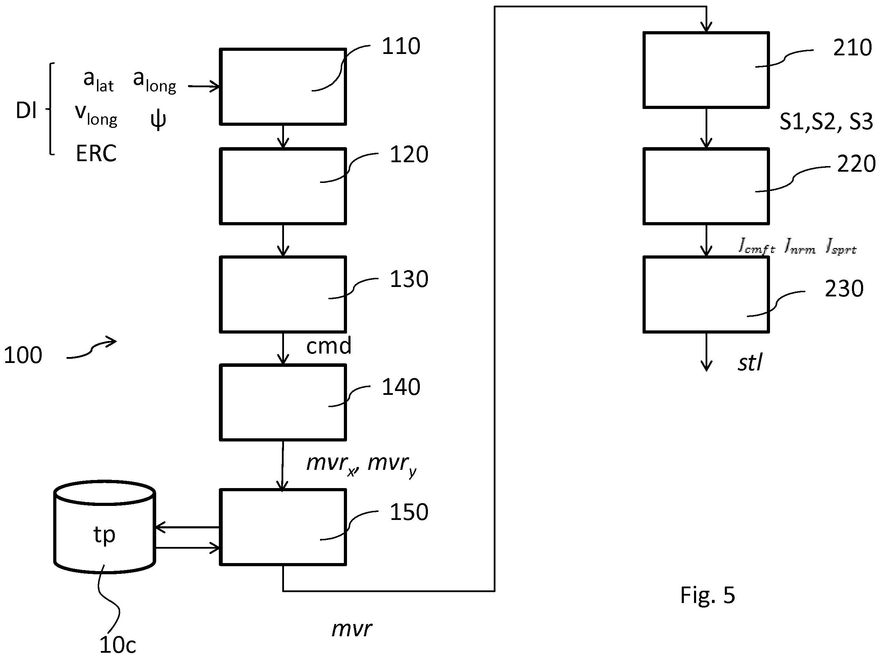

The flowchart of Figure 5 shows an embodiment 100 provided by way of example of the method for recognizing the driving style of a driver of land vehicles described herein, which may in general comprise the following operations:

- an operation of acquisition 110 of signals regarding information on the dynamics of the vehicle DI, for example from direct or indirect sensors of the vehicle TV;
- an operation of filtering 120 of said signals DI from noise;
- an operation of recognition 130 of start and end of the manoeuvre-recognition event with sending of an activation/de-activation signal cmd for block 30;
- an operation of reconstruction 140 of the manoeuvre *mvr* as a function of the information on the dynamics of the vehicle DI, which comprises transformation of said information DI into a displacement time series $mvr_x$, $mvr_y$;
- an operation of identification 150 of the manoeuvre *mvr*, which envisages comparing the displacement time series $mvr_x$, $mvr_y$ with template series tp that represent predetermined manoeuvres, this comparison being carried out via a Dynamic-Time-Warping algorithm;
- an operation of definition 210 of the manifolds S1, S2, S3 in the G-G plane defined by the lateral acceleration and the transverse acceleration, which comprises estimating the maximum acceleration to define the ellipse of maximum adherence EA and hence define the size of the manifolds S1, S2, S3 within the aforesaid ellipse of maximum adherence EA;
- an operation of computation of 220 cost functionals $J_{cmft}$, $J_{nrm}$, $J_{sprt}$ of the manoeuvre *mvr* associated to the recognition event for the various manifolds S1, S2, S3; and
- an operation of identification 230 of the driving style *stl* on the basis of the cost functional $J_{cmft}$, $J_{nrm}$, $J_{sprt}$ of minimum value.

Basically, the operations 110 to 150 correspond to the operation of manoeuvre detection and identification, implemented in the block or module 10 of Figure 4, whereas the operations 210 to 230 correspond to the operation of driving-style recognition implemented in the module 20.

The method described may in general not comprise some of the operations indicated, for example filtering 110, in the case where the signals are of good quality.

It is clear that the operation of recognition 130 of start and end of the manoeuvre-recognition event comprises, when the end of a manoeuvre event *mvr* is identified on the basis of the values of the information DI, sending a command cmd for de-activation of the manoeuvre-recognition module 30, which consequently stops processing the signals regarding the information DI.

The operations of the method 100 are now described in further detail.

*Acquisition operation 110*

As has been said, the operation 110 of acquisition of signals regarding information on the dynamics of the vehicle DI can resort to direct sensors, for example accelerometers, or indirect sensors of the vehicle TV, and similar information coming from the INS system of the vehicle or also from external sensors that transmit information to the vehicle. The signals corresponding to the operation 110 of acquisition of signals regarding information on the dynamics of the vehicle DI comprise, as has been said, the longitudinal velocity $v_{long}$, the longitudinal acceleration $a_{long}$, the lateral acceleration $a_{lat}$, and the angle of yaw $\psi$ and may moreover comprise, as in the example described, also a given road and/or environmental condition ERC. The signals of the sensors may arrive through a bus or a wireless connection, in particular a CAN bus, of the vehicle to the processor or processors that implement the method 100 and the modules 10, 20 of Figure 2 or Figure 4.

*Filtering operation 120*

The operation of filtering 120 of the acceleration input signals coming from the accelerometers and/or from a vehicle bus, for example, the CAN bus, provides that they are filtered in order to reduce the noise contained therein. The filters used are low-pass filters and filters with forgetting factor in order to take into account only a certain number of previous samples or low-pass filters for the reduction of noise.

*Operation 130 of recognition of start and end of the manoeuvre-recognition event*

This operation 130, which is, for example, carried out in the module 25, envisages making an analysis of the aforesaid input signals regarding the information DI, in particular the lateral acceleration $a_{lat}$, in order to discriminate the start of a manoeuvre-recognition event. From the start of the event, following upon which a command cmd is sent for activating the modules 10, 10a, 10b, and 20 in the module 30 of Figure 4, the values of vehicle velocity $V_{long}$, longitudinal acceleration $a_{long}$, lateral acceleration $a_{lat}$, angle of yaw $\psi$, and a given road and/or environmental condition ERC are acquired and processed according to steps 140-230, until the event itself is through and upon sending of a de-activation command cmd. The criterion that enables evaluation of activation of an event in the operation 130 is in general evaluation of overstepping of a threshold value by the lateral acceleration $a_{lat}$ and/or by the longitudinal acceleration $a_{long}$. This threshold value is in particular chosen as a function of the vehicle velocity $v_{long}$.

For example, it is envisaged to evaluate overstepping of a threshold value, which is a function of the vehicle velocity $v_{long}$ and is calibratable, by the lateral acceleration $a_{lat}$ and/or by the longitudinal acceleration $a_{long}$, preferably filtered through a filter with forgetting factor or a low-pass filter. When the lateral acceleration $a_{lat}$ and/or the longitudinal acceleration $a_{long}$ exceed/exceeds the aforesaid threshold for a given time, which is also calibratable so as to prevent activations of the calculation following upon false positives, the method described activates via the command cmd the recognition module 30 and the modules 10 and 20 comprised therein, for reconstructing the manoeuvre *mvr*, identifying it, and determining the driving style *stl*.

Alternatively, it is possible to evaluate overstepping of a threshold value by the lateral acceleration $a_{lat}$ and/or the longitudinal acceleration $a_{long}$ by evaluating overstepping of a threshold, which is calibratable and is a function of the vehicle velocity $v_{long}$, by the moving average (simple moving average, SMA), which, for example for the lateral acceleration $a_{lat}$, is defined as follows:

$$\sqrt{\frac{a_{lat}^2(i) + a_{lat}^2(i-1) + a_{lat}^2(i-1-k)}{k}} \qquad (1)$$

where $k$ is the length of the time window in which the average of the lateral acceleration $a_{lat}$ is to be observed, and i is the index of the acceleration value acquired in a time series of acquired values. If the moving average *SMA* is higher than an upper threshold $th_u$, then the acceleration value $a_{lat}(i-k-1)$ represents the start of the manoeuvre event.

It may be envisaged to operate in a similar way for the first derivative of the signals of lateral acceleration $a_{lat}$ and longitudinal acceleration $a_{long}$.

The subsequent values of lateral acceleration $a_{lat}$ are concatenated until the moving average *SMA* is lower than a lower threshold $th_l$. If the duration of the event exceeds a pre-set time, the event is rejected.

Once the module for recognition of start/end of event 25 has activated the calculation performed in the modules of the event-recognition block 30, the aim is to reconstruct the displacement of the vehicle TV so as to provide a time series representing the displacement n order to identify the manoeuvre performed.

*Operation 140 of reconstruction of the manoeuvre mvr as a function of the information on the dynamics of the vehicle* DI

Considering the dynamic behaviour of the vehicle, the module 10a is configured, in the context of the operation 140, so as to reconstruct the displacement of the vehicle TV along orthogonal axes x and y, defined for convenience as horizontal and vertical, in the plane XY of displacement of the vehicle, as a function of the longitudinal velocity $v_{long}$, the lateral velocity $v_{lat}$, and the angle of yaw $\psi$ (path reconstructor), to obtain components $X_g(t)$ and $Y_g(t)$ of the displacement according to the aforesaid axes as a function of time t, as:

$$X_g(t) = \int_0^t \left[\cos(\psi(\tau)) \cdot v_{long}(\tau) - \sin(\psi(\tau)) \cdot v_{lat}(\tau)\right] d\tau \qquad (2)$$

$$Y_g(t) = \int_0^t \left[\sin(\psi(\tau)) \cdot v_{long}(\tau) + \cos(\psi(\tau)) \cdot v_{lat}(\tau)\right] d\tau \qquad (3)$$

The lateral velocity $v_{lat}$ can be obtained by integration of the lateral acceleration $a_{lat}$ or else also via a system of complementary filters.

This approach provides the evolution in time of the displacement of the vehicle TV.

Starting from activation of the manoeuvre-recognition event, the method proposed envisages calculating the displacement of the vehicle TV according to Eqs. (2) and (3) and calculating, on the basis of the aforesaid components $X_g(t)$ and $Y_g(t)$, the displacement according to the above axes as a function of time t, the corresponding displacement time series, i.e., series $mvr_x$ of values of horizontal components $X_g(t)$ and series $mvr_y$ of values of vertical components $Y_g(t)$ of the displacement at given sampling instants, for example every 10 ms, which represent the manoeuvre *mvr*.

*Operation 150 of identification of the manoeuvre mvr*

Once the time series $mvr_x$, $mvr_y$ representing the manoeuvre *mvr* made by the vehicle TV in the module 10a has been reconstructed, this is supplied to the module 10b for identification 150 of the specific manoeuvre *mvr*. In the context of this operation 150, it is envisaged to have available, stored in a database, designated by 10c in Figures 4 and 5, comprised or associated to the module 10b, time series, referred to as templates tp, representing pre-determined or standard manoeuvres to be identified, by way of non-limiting example, curving to the right, curving to the left, lane changing, double lane changing, and possibly other manoeuvres. The time series of the reconstructed manoeuvre $mvr_x$, $mvr_y$ is compared with the templates tp stored. The correct manoeuvre *mvr* is identified by the template tp in the database 10c most similar to the current series.

This resemblance is evaluated by comparing the time series of the reconstructed manoeuvre $mvr_x$, $mvr_y$ with the template series tp using, as mentioned, a Dynamic-Time-Warping (DTW) algorithm, which is in itself known to the person skilled in the sector, for example, from the publication authored by Stan Salvador and Philip Chan, 2007, "Toward accurate dynamic time warping in linear time and space", Intell. Data Anal. 11, 5 (October 2007), 561-580. This algorithm is able to determine optimal alignment between two time series that do not necessarily have the same temporal axis, but may also be expanded or compressed.

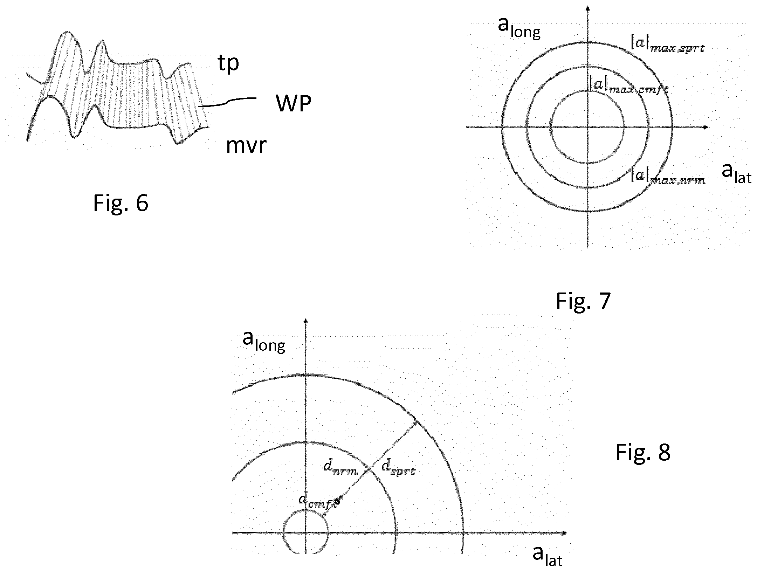

Figure 6 shows a so-called warping path WP and calculation of alignment between the time series *mvr* and the template tp. Owing to this characteristic, the DTW algorithm is an algorithm indicated for recognising manoeuvres that can be performed with different driving styles, and hence at different speeds and with different times. Identification of the template tp that approaches most closely the time series of the reconstructed manoeuvre $mvr_x$, $mvr_y$ compiled by the module 10a is based on the distance or warping between the aforesaid time series of the reconstructed manoeuvre $mvr_x$, $mvr_y$ and the template tp stored in the database 10c. Warping is a measurement of the difference between two time series. To determine the similarity between the two time series a Euclidean or Manhattan distance is used.

Given two time series, namely, *X*, corresponding to the reconstructed time series, and *Y*, corresponding to the time series selected from the templates stored, which are of length m and n, respectively,

$$X - x_1, x_2, \dots, x_m \qquad (4)$$

$$Y = y_1, y_2, \dots, y_n \qquad (5)$$

the Euclidean distance between points $x_i$, $y_j$ of the two time series is defined as

$$D(i, j) = \left\| x_i - y_j \right\| \qquad (6)$$

The total cost $c_p$ of the alignment between the two series *X* and *Y* is defined as the sum of the distances computed over the optimal path which is the result of the DTW problem and defined by the K pairs of points $(i_1, j_1)$ ...... $(i_K, j_K)$ :

$$c_p(X, Y) = \sum_{k=1}^{K} D(x_{ik}, y_{jk}) \qquad (7)$$

Given the total cost $c_p$ of alignment of the reconstructed series $mvr_x$, $mvr_y$ for each of the templates stored, the template that entails the minimum value of the total cost $c_p$ represents the closest series and hence the manoeuvre *mvr* carried out. In particular, the component of the reconstructed series along the axis x $mvr_x$ is compared with the corresponding component along the axis X of the template, and likewise the component of the reconstructed series along the axis y $mvr_y$ is compared with the corresponding component along the axis Y of the template.

*Operation 210 of definition of the manifolds S1, S2, S3*

Once the manoeuvre *mvr* has been identified, the profiles, i.e., the sequences of values in the framework of the event recognized in step 130, of the longitudinal acceleration $a_{long}$ and of the lateral acceleration $a_{lat}$ are supplied to the driving-style-recognition module 20 in order to estimate the driving style $stl$ with which the driver has made the manoeuvre.

As has been mentioned, the manifolds S1, S2, S3 that then determine the driving styles are defined on the basis of the results obtained by the strategy 300 of characterization of the driving styles provided in Figure 10. On the basis of this consideration, it is envisaged to determine the maximum value of the modulus of the acceleration $|\bar{a}|$ of the vehicle TV such that the driving conditions remain safe, i.e., such that the accelerations of the vehicle TV remain within the ellipse of adherence EA.

The estimation of the maximum acceleration starts from the limit conditions of Newton's second law:

$$F_R = mg\mu = m|\bar{a}| \tag{8}$$

where $F_R$ is the force of friction, $m$ is the mass of the vehicle, g is the acceleration of gravity, $\mu$ is the coefficient of friction, and $|\bar{a}|$ is the modulus of the accelerations. Eq. (8) represents the limit between the condition of adherence and the condition of non-adherence: if the points of the longitudinal and lateral accelerations fall within these limits, the conditions of adherence are verified. This condition can be defined as safety condition.

The coefficient of friction $\mu$ depends upon the conditions of the road surface, the wear of the tyres and other factors, and this value is here assumed as remaining constant. The force of friction is conventionally divided into the two longitudinal and lateral components in relation to the direction of motion. Using the relation between the longitudinal coefficient of friction $\mu_{x,max}$ and the vehicle velocity v, proposed in R. Lamm, B. Psarianos, T. Mailaender, "Highway Design and Traffic Safety Engineering Handbook", McGraw-Hill, 1999, and valid for dry conditions, we obtain:

$$\mu_{x,max} = 0.214 \left(\frac{v}{100}\right)^2 - 0.640 \left(\frac{v}{100}\right) + 0.615 \tag{9}$$

where v is the vehicle velocity expressed in km/h.

Once again according to the aforesaid text by Lamm et *al.,* the relation between the lateral component $\mu_{y,max}$ and the longitudinal component $\mu_{x,max}$ can be expressed as:

$$\mu_{y,max} = 0.925\, \mu_{x,max} \tag{10}$$

Considering Eqs. (8), (9), and (10), it is possible to determine the modulus of the maximum acceleration $|\bar{a}|$ that identifies the limit conditions for the tyre-road adherence as a function of the vehicle velocity:

$$|\bar{a}| = g \left[ 0.198 \left(\frac{v}{100}\right)^2 - 0.592 \left(\frac{v}{100}\right) + 0.569 \right] \tag{11}$$

The maximum value of acceleration $|\bar{a}|$ obtained from Eq. (11) is used in the solution described herein for defining the three manifolds within the ellipse of maximum adherence EA that identifies the maximum value of acceleration $|\bar{a}|$ in the G-G diagram of Figure 3. As may be seen from Eq. (11), corresponding to different values of the vehicle velocity are different values of maximum acceleration $|\bar{a}|$ and hence different dimensions of the ellipse of adherence EA. The three manifolds S1, S2, S3, which are also variable as a function of the vehicle velocity, are used for identifying the different driving styles: comfortable or relaxed driving style, normal driving style, and sporting driving style. The style is identified by the manifold closest to the distribution of the points corresponding to the lateral acceleration and the longitudinal acceleration.

The numeric coefficient expressed in Eqs. (9), (10), and (11) can vary on the basis of the vehicle and are defined on the basis of the types of vehicle considered.

The manifolds S1, S2, S3 representing the three driving styles are defined by means of three driving-style parameters *PAR_MAN*1*, PAR_MAN*2*,* and *PAR_MAN*3 that multiply the maximum acceleration $|\bar{a}|$ and define a corresponding condition for the modulus of the acceleration of the vehicle, namely, respective values of maximum acceleration of the manifolds $|a|_{max,cmft}$, $|a|_{max,nrm}$, $|a|_{max,sprt}$, illustrated in Figure 7, as follows:

$$|a|_{max,cmft} = |\overline{a}|PAR\_MAN1 \qquad (12)$$

$$|a|_{max,nrm} = |\overline{a}|PAR\_MAN2 \qquad (13)$$

$$|a|_{max,sprt} = |\overline{a}|PAR\_MAN3 \qquad (14)$$

for the relaxed or comfortable driving style (12), the normal driving style (13), and the sporting driving style (14), respectively. Characterization of the parameters *PAR_MAN1, PAR_MAN2,* and *PAR_MAN3,* which are usually of a value lower than one (even though, according to the calibrations made, they may even have values slightly exceeding unity) and indicate the description of the three distinct manifolds is defined in what follows.

The values of acceleration are converted into mg units and plotted on the G-G acceleration diagram.

*Operation 220 of computation of cost functionals $J_{cmft}$, $J_{nrm}$, $J_{sprt}$*

The solution described herein envisages identifying the driving style by means of the manifold S1, S2, or S3 that is closest to the distribution of the accelerations of the manoeuvre *mvr* supplied by the module 10b (operation 150). For this purpose, cost functionals *J* are defined, respectively $J_{cmft}$, $J_{nrm}$, $J_{sprt}$, for the three driving styles, which calculate a distance between the point defined by the value of acceleration in the G-G plane and the boundary of each of the three manifolds S1, S2, S3, which is preferably represented by the respective values of maximum acceleration of the manifold $|a|_{max,cmft}$, $|a|_{max,nrm}$, $|a|_{max,sprt}$. The manifold that entails the lowest functional *J* identifies the driving style CL1, CL2, CL3 with which the manoeuvre *mvr* has been performed.

The cost functionals $J_{cmft}$, $J_{nrm}$, $J_{sprt}$ are defined as the plots in time, preferably weighted through forgetting factors, of the quadratic radial distances $d_{cmft}$, $d_{nrm}$, $d_{sprt}$, represented in Figure 8, between the modulus of the current acceleration vector $|\overline{a}_c|$, which is the modulus of the vector sum of the lateral and longitudinal accelerations as a function of time, instant by instant, and the modulus of the maximum acceleration of the manifolds $|a|_{max,cmft}$, $|a|_{max,nrm}$, $|a|_{max,sprt}$

$$d_{cmft} = \left(|a|_{max,cmft} - |\overline{a}_c|\right)^2 \qquad (15)$$

$$d_{nrm} = \left(|a|_{max,nrm} - |\overline{a}_c|\right)^2 \qquad (16)$$

$$d_{sprt} = \left(|a|_{max,sprt} - |\overline{a}_c|\right)^2 \qquad (17)$$

*Operation 230 of identification of the driving style stl on the basis of the cost functionals $J_{cmft}$, $J_{nrm}$, $J_{sprt}$*

The driving style *stl* is identified by the manifold S1, S2, S3 closest to the distribution of the accelerations and hence by the minimum cost functional *J*:

$$if\ \min\left(J_{cmft}, J_{nrm}, J_{sprt}\right) = J_{cmft} \ \rightarrow sts = DRVSTL\_STS\_CMFT$$

$$(18)$$

$$if\ \min\left(J_{cmft}, J_{nrm}, J_{sprt}\right) = J_{nrm} \ \rightarrow sts = DRVSTL\_STS\_NRM \qquad (19)$$

$$if\ \min\left(J_{cmft}, J_{nrm}, J_{sprt}\right) = J_{sprt} \ \rightarrow sts = DRVSTL\_STS\_SPRT \qquad (20)$$

DRVSTL_STS_CMFT, DRVSTL_STS_NRM, DRVSTL_STS_SPRT are string values that identify the comfortable or relaxed driving style, the normal driving style, and the sporting driving style and that are assigned to the variable sts that identifies the driving style *stl,* as a function of the results of Eqs. (18), (19), (20).

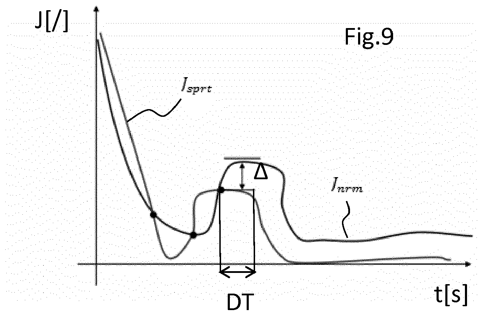

According to a further aspect of the solution described herein, the possible transitions between two styles during a manoeuvre are managed so as to prevent oscillations in the characterization of the driver. The transitions between one style and another are allowed when the new style, and hence the new minimum cost functional, is lower than the previous one by an amount ∆ for a calibratable time interval DT, defined previously. This approach is illustrated in Figure 9, where a diagram is shown that indicates the values of the functionals *J* as a function of time t, and specifically shows a transition between a normal driving style and a sporting driving style, the functional $J_{sprt}$ of which is lower, by an amount ∆, than the functional of the normal style $J_{nrm}$ for a time window sufficiently long as to determine change of the driving style *stl,* i.e., of the value assigned to the corresponding variable *sts*.

The manoeuvre *mvr* identified is preferably used as further input by the driving-style-identification block 20 (for example, a high number of lane changes may be indicative of an aggressive or sporting driving style).

Described in what follows is a procedure of definition of the classes of driving style CL1, CL2, CL3 and of parameters of the regions S1, S2, S3 used by the recognition method described herein, for example by the method 100.

Hence, Figure 10 is a schematic representation of a procedure 300 of characterization of the driving style that is applied to a plurality of different drivers, for instance, in the framework of a testing stage, which is, for example, carried out in the factory, that is preliminary to the recognition method described herein, which operates, instead, when the vehicle is travelling in normal running conditions.

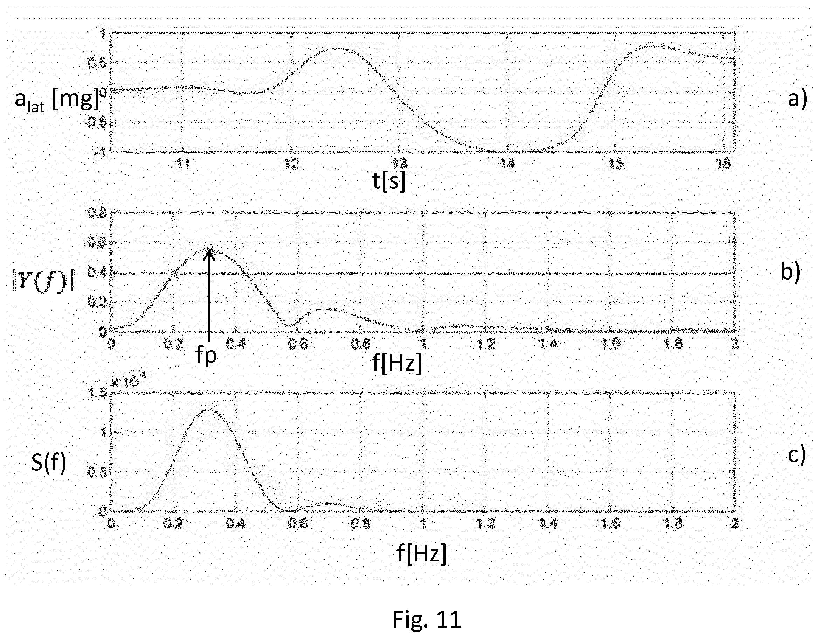

Designated by 310 is a procedure of analysis of the characterization data, which uses in general information DI on the dynamics of the vehicle, commands of the driver U, such as the steering angle, information on the habitual driving style Z of the driver, and values of peak frequency *fp* of a frequency analysis that will be described in what follows with reference to Figure 11. It is pointed out that these are not necessarily data supplied at input to block 310, but data used by block 310, which can also be generated in different steps of the analysis procedure 310.

Hence, characterization 300 of the driving style is based upon the evaluation of dynamic quantities such as, *inter alia,* lateral acceleration, longitudinal acceleration, vehicle velocity, and steering angle. For the characterization of the driving styles, a classification has been carried out on the basis of the analysis of data of different real drivers for manoeuvres that are such as to stress the dynamics of the vehicle, in particular the lateral dynamics, and are, for example:

- double lane changing to the left
- double lane changing to the left at high speed
- curving to the right
- curving to the left
- going round a roundabout
- longitudinal acceleration on a straight road
- longitudinal deceleration on a straight road

For example, one of the indices used for classification of the driver is the value of the peak frequency obtained from the frequency analysis, mentioned above, of the spectrogram of the normalized lateral acceleration $a_{lat}$ or, equivalently, of a normalized steering-wheel angle during execution of the double-lane-change manoeuvre.

Figure 11 shows the time evolution of the lateral acceleration $a_{lat}$ (Figure 11(a)) as well as the spectrum $|Y(f)|$ (Figure 11(b)) of the acceleration, i.e., the Fourier transform of the lateral acceleration $a_{lat}$ in the frequency domain (where the frequency *f* is expressed in Hz) and the power spectral density S(f) (Figure 11(c)) of the lateral acceleration as a function of the frequency *f*, with identification of the peak frequency *fp*.

Figure 11 shows, in particular, the result of the process of analysis carried out in block 300, and applied, for example, to the lateral acceleration $a_{lat}$. The observation of the index appearing in Figure 11 (b) enables identification of the driving style of the driver (normal driving style, relaxed driving style, sporting driving style).

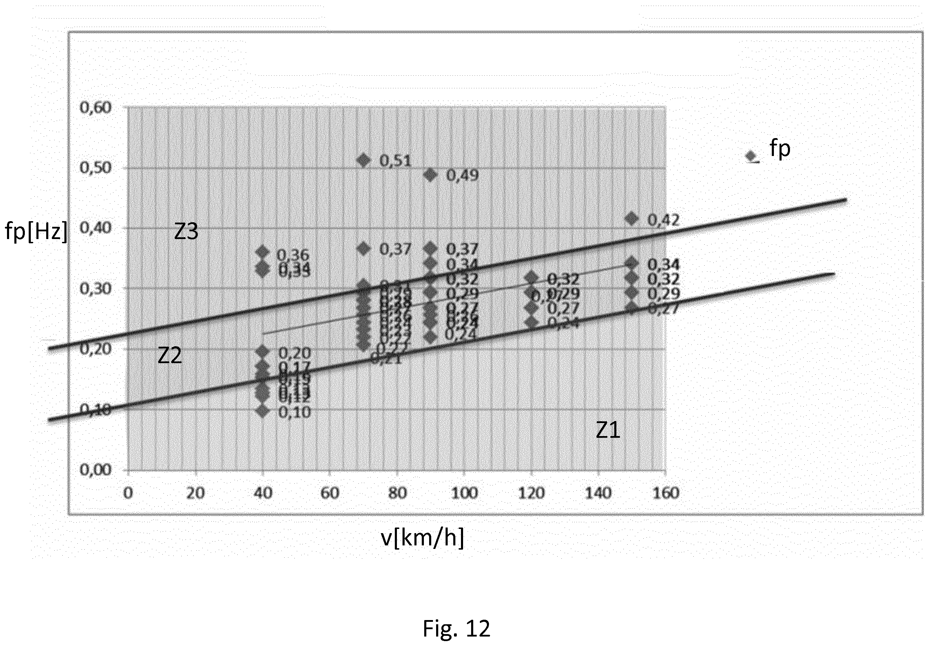

Figure 12 shows a diagram that represents the values of the peak frequency *fp* for all the manoeuvres of all the different drivers (whose measured values *fp* are denoted via diamonds) as a function of the velocity *v* of the vehicle TV at which the manoeuvre has been performed. From the diagram it is found that the plot of the peak frequency *fp* of the lateral acceleration $a_{lat}$ linearly increases as a function of the vehicle velocity *v*. It is hence possible to identify three areas of membership Z1, Z2, Z3 in the plane peak frequency *fp* vs. vehicle velocity *v* that identify with which driving style Z the manoeuvre has been carried out, corresponding to the comfortable or relaxed style, the normal style, and the sporting driving style, respectively.

Similar analyses are carried out, for example, also on the longitudinal acceleration and on the steering angle, to arrive at the identification of classes of values for these quantities analysed in step 320 that represent the three driving styles CL1, CL2, CL3. By combining the results of the analyses, each driver is characterized in step 330, where a driving style *stl* is attributed to each of them, i.e., associated to each driver is one of the three driving styles CL1, CL2, CL3.

After the step 330 of characterization of the drivers, or independently thereof, the data of the manoeuvres of step 310 are used for calibrating, in a step 340, the manifolds S1, S2, S3 described previously. In particular the values of the style parameters *PAR_MAN*1*, PAR_MAN*2*,* and *PAR_MAN3*, defined in Eqs. (12), (13), and (14) respectively, are calculated so that each manifold S1, S2, S3 will approximate as closely as possible the distribution of the accelerations. The parameters are computed by applying the relations:

$$PAR\_MAN1 \; = \; \min_{PAR\_MAN1} \; J_{cmft} \hspace{2cm} (21)$$

$$PAR\_MAN2 \; = \; \min_{PAR\_MAN2} \; J_{nrm} \hspace{2cm} (22)$$

$$PAR\_MAN3 \; = \; \min_{PAR\_MAN3} \; J_{sprt} \hspace{2cm} (23)$$

Namely, the parameter corresponding to a style is the one that minimizes the respective cost functional *J*, applied, for example, to the acceleration of the drivers that are undergoing the testing procedure and are then classified according to the classes CL1, CL2, CL3, instead of to the current acceleration as described previously. In other words, the parameters are defined on the basis of the data of the drivers who have performed the tests. Subsequently, these parameters define the manifolds for real-time classification according to the current acceleration. In this way, the maximum values of acceleration that delimit the regions S1, S2, S3, $|a|_{max,cmft}$, $|a|_{max,nrm}$, $|a|_{max,sprt}$ are defined.

Hence, basically, the procedure 300 of characterization of the driving styles comprises acquiring values of information DI on the dynamics of the vehicle from sensors, and possibly commands of the driver such as the steering commands, corresponding to execution by a plurality of drivers of a given set of manoeuvres, calculating spectra of the above values, for example the power spectral density, and values of peak frequency *fp* of the spectra, plotting the frequency values *fp* as a function of the velocity *v* of the vehicle TV, and defining, in the velocity-frequency plane thus defined, regions Z1, Z2, Z3 corresponding to classes of driving style CL1, CL2, CL3.

The procedure 300 of characterization of the driving styles may in addition or alternatively comprise, not only the step 310 that envisages acquiring values of information DI on the dynamics of the vehicle from sensors corresponding to execution by a plurality of drivers of a given set of manoeuvres, but also using these values for a step 340 of calibration of the driving-style parameters *PAR_MAN*1*, PAR_MAN*2*,* and *PAR_MAN3* in such a way that each region S1, S2, S3 of the G-G plane will approximate as closely as possible the distribution of the accelerations in the aforesaid data, in particular selecting the driving-style parameter that minimizes the respective cost functional.

In conclusion, by means of the analysis of real data coming from different drivers, an index identifying the driving style is defined, through which it is possible to characterize the method via definition of the manifolds in the G-G diagram.

Once the classes CL1, CL2, and CL3 corresponding to the driving styles have been identified (see Figure 12), according to the procedure referred in block 320, for each class CL1, CL2, CL3 the data of the drivers belonging to each class will be analysed for identification of the respective parameters *PAR_MAN*1*, PAR_MAN*2*,* and *PAR_MAN3* according to Eqs. (21), (22), and (23). By applying Eqs. (21), (22), and (23), it is possible to obtain the descriptive parameters of the manifolds S1, S2, and S3.

Hence, from what has been described above, the advantages of the solution proposed emerge clearly.

The solution described advantageously enables recognition of the driving style on the basis of the information on the dynamics of the vehicle, enabling definition of the driving style on the basis of three defined levels:

- comfortable or relaxed driving style
- normal driving style
- sporting driving style

Each type of driver can be characterized on the basis of the evaluation of how the driver performs given manoeuvres.

In particular, starting from the information of vehicle dynamics, it is possible to arrive at the manoeuvre performed (i.e., curving to the right, curving to the left, lane changing, etc.). On the basis of the evaluation of the vehicle velocity, lateral acceleration, and longitudinal acceleration, a cost function is defined that is able to determine the driving style.

**Claims**

**1.**   A method for recognizing the driving style of a driver of a land vehicle, of the type that envisages acquiring (110) information (DI) on the dynamics of the vehicle from sensors and calculating, as a function of said information (DI) on the dynamics of the vehicle, a class of membership of the driving style (*stl*) of the driver, said method being **characterized in that** it comprises:

- analysing (130) said information (DI) on the dynamics of the vehicle in order to identify the start of an event of recognition of a manoeuvre (*mvr*) and to start (cmd) a procedure (130) of recognition of the event, which comprises:

- reconstructing (140) a manoeuvre (*mvr*) performed by the driver by computing components of displacement of the vehicle ($X_g(t)$, $Y_g(t)$) as a function of the information on the dynamics of the vehicle (DI) arranged in a displacement time series ($mvr_x$, $mvr_y$) that represents a reconstruction of said manoeuvre (*mvr*);
- identifying (150) the manoeuvre performed (*mvr*) by comparing said displacement time series ($mvr_x$, $mvr_y$) with models (tp) of time series corresponding to pre-determined manoeuvres stored in a database, in particular by applying a Dynamic-Time-Warping procedure;
- defining (210) regions, in particular manifolds, (S1, S2, S3), in a cartesian plane having as axes a lateral acceleration ($a_{lat}$) and a longitudinal acceleration ($a_{long}$) comprised in said information (DI) on the dynamics of the vehicle;
- computing (220) cost functionals ($J_{cmft}$, $J_{nrm}$, $J_{sprt}$) for three driving styles, which calculate a distance between points defined by values of acceleration in said cartesian plane of said manoeuvre (*mvr*) and the boundary of each of three respective regions (S1, S2, S3);

- recognising (230) the driving style (*stl*), on the basis of said cost functionals.

2. The method according to Claim 1, **characterized in that** said information (DI) on the dynamics of the vehicle also comprises information (ERC) on the road condition or external environment.

3. The method according to Claim 1 or Claim 2, **characterized in that** said operation of analysing said information (DI) on the dynamics of the vehicle in order to identify the start of an event of recognition of a manoeuvre (*mvr*) and to start (cmd) a procedure of recognition (30) of the event comprises evaluating overstepping of a threshold value by the lateral acceleration ($a_{lat}$).

4. The method according to Claim 1 or Claim 2, **characterized in that** it comprises an operation of filtering (120) of the noise in the signals regarding said acquired information (DI) on the dynamics of the vehicle, in particular via low-pass filters and/or filters with forgetting factor.

5. The method according to Claim 1 or Claim 2, **characterized in that** said operation of reconstructing (140) a manoeuvre (*mvr*) performed by the driver by computing components of displacement of the vehicle as a function of the information on the dynamics of the vehicle arranged in a time series (*X, Y*) comprises reconstructing the displacement of the vehicle (TV) as a function of the longitudinal velocity ($v_{long}$), the lateral velocity ($v_{lat}$), and the angle of yaw ($\psi$), to obtain components ($X_g(t)$, $Y_g(t)$) of the displacement as a function of time (*t*) and calculating, on the basis of said components ($X_g(t)$, $Y_g(t)$) of the displacement as a function of time (t), corresponding displacement time series ($mvr_x$, $mvr_y$) that represent the manoeuvre (*mvr*) .

6. The method according to Claim 1 or Claim 2, **characterized in that** said operation of identifying (150) the manoeuvre (*mvr*) performed comprises making said comparison by applying a Dynamic-Time-Warping procedure to evaluate the resemblance between said displacement time series ($mvr_x$, $mvr_y$) and said models of time series (tp) corresponding to pre-determined stored manoeuvres.

7. The method according to Claim 6, **characterized in that** it comprises defining said regions (S1, S2, S3) by means of respective style parameters (*PAR_MAN*1, *PAR_MAN*2, and *PAR_MAN*3) that multiply the maximum acceleration and define a corresponding condition of maximum acceleration ($|a|_{max,cmft}$, $|a|_{max,nrm}$, $|a|_{max,sprt}$) for the modulus of the acceleration of the vehicle (TV).

8. The method according to Claim 7, **characterized in that** said cost functionals ($J_{cmft}$, $J_{nrm}$, $J_{sprt}$) are defined as the time curves of quadratic radial distances ($d_{cmft}$, $d_{nrm}$, $d_{sprt}$) between points defined by values of acceleration in said cartesian plane of said manoeuvre (*mvr*) that are defined by the modulus of the current acceleration vector ($|\bar{a}|$) and the boundary of each of the three manifolds (S1, S2, S3), defined by the modulus of the maximum acceleration of the manifolds ($|a|_{max,cmft}$, $|a|_{max,nrm}$, $|a|_{max,sprt}$) .

9. The method according to Claim 1 or Claim 2, **characterized in that** said operation of recognizing (230) the driving style *(stl)* on the basis of said cost functionals comprises identifying the region that is closest to the distribution of the accelerations and hence presenting the minimum cost functional (J), said region being identified by the cost functional that has the minimum value.

10. The method according to Claim 1 or Claim 2, **characterized in that** it comprises selecting a new style if a minimum cost functional associated to the new style is lower than the previous one by a given amount ($\Delta$) for a given time interval (DT), which is in particular calibratable.

11. The method according to Claim 1 or Claim 2, **characterized in that** it comprises using the manoeuvre *(mvr)* as further input value for the operation of identifying the driving style.

12. The method according to Claim 7, **characterized in that** it comprises a procedure of characterization of the driving styles (300), which includes acquiring values of information (DI) on the dynamics of the vehicle from sensors corresponding to execution by a plurality of drivers of a given set of manoeuvres, calculating spectra of said values and peak frequency values of said spectra, plotting said frequency values (fp) as a function of the velocity (v) of the vehicle (TV), and defining in the velocity-frequency plane thus defined regions (Z1, Z2, Z3) corresponding to classes (CL1, CL2, CL3) of driving style.

13. The method according to Claim 7, **characterized in that** it comprises a procedure of characterization of the driving styles (300), which includes a step (310) that envisages acquiring values of information (DI) on the dynamics of the vehicle from sensors, in particular also sensors for detecting road or environmental conditions (ERC), corresponding to execution by a plurality of drivers of a given set of manoeuvres, and using said values for calibrating (340) said style parameters *(PAR_MAN1, PAR_MAN2,* and *PAR_MAN3)* in such a way that each region (S1, S2, S3) will approximate as closely as possible the distribution of the accelerations in said data, in particular selecting the style parameter that minimizes the respective cost functional.

14. An apparatus for recognizing the driving style of a driver of a land vehicle, comprising sensor means for acquiring (110) information (DI) on the dynamics of the vehicle from sensors and configured for calculating, as a function of said information on the dynamics of the vehicle, a class of membership of the driving style *(stl)* of the driver, said apparatus being **characterized in that** it comprises one or more microprocessor modules (10, 20, 25) configured for carrying out the operations of the method according to any one of Claims 1 to 13.

15. The apparatus according to Claim 14, **characterized in that** said one or more microprocessor modules (10, 20, 25) are implemented via one or more processors of the motor vehicle (TV).

16. The apparatus according to Claim 14, **characterized in that** said one or more microprocessor modules (10, 20, 25) are implemented via a portable computer terminal, in particular comprising a triaxial accelerometer and a GPS position detector.

**Patentansprüche**

1. Verfahren zum Erkennen des Fahrstils eines Fahrers eines Landfahrzeugs, von der Art, die vorsieht, Informationen (DI) über die Dynamik des Fahrzeugs von Sensoren zu erfassen (110) und als Funktion dieser Informationen (DI) über die Dynamik des Fahrzeugs eine Zugehörigkeitsklasse des Fahrstils (stl) des Fahrers zu berechnen, wobei das Verfahren **dadurch gekennzeichnet ist, dass** es umfasst:

   - Analysieren (130) der Informationen (DI) über die Dynamik des Fahrzeugs, um den Beginn eines Ereignisses der Erkennung eines Manövers (mvr) zu identifizieren und eine Prozedur (130) der Erkennung des Ereignisses zu starten (cmd), die umfasst:

      - Rekonstruieren (140) eines von dem Fahrer ausgeführten Manövers (mvr) durch Berechnung der Komponenten der Verschiebung des Fahrzeugs ($X_g(t)$, $Y_g(t)$) als Funktion der Informationen über die Dynamik des Fahrzeugs (DI), die in einer Zeitreihe der Verschiebung (*mvr_x*, *mvr_y*) angeordnet sind, die eine Rekonstruktion dieses Manövers (mvr) darstellt;
- Identifizieren (150) des durchgeführten Manövers (mvr) durch Vergleichen der Zeitreihe der Verschiebung ($mvr_x$, $mvr_y$) mit Modellen (tp) von Zeitreihen, die vorgegebenen Manövern entsprechen, die in einer Datenbank gespeichert sind, insbesondere durch Anwendung eines Dynamic-Time-Warping-Verfahrens;
- Definieren (210) von Bereichen, insbesondere von Mannigfaltigkeiten, (S1, S2, S3) in einer kartesischen Ebene, die als Achsen eine Querbeschleunigung ($a_{lat}$) und eine Längsbeschleunigung ($a_{long}$) hat, die in den Informationen (DI) über die Dynamik des Fahrzeugs enthalten sind;
- Berechnen (220) von Kostenfunktionalen ($J_{cmft}$, $J_{nrm}$, $J_{sprt}$) für drei Fahrstile, die einen Abstand zwischen Punkten, die durch Beschleunigungswerte in der kartesischen Ebene des Manövers (mvr) definiert sind, und der Grenze jedes der drei entsprechenden Bereiche (S1, S2, S3) berechnen;
- Erkennen (230) des Fahrstils (stl) auf der Grundlage der Kostenfunktionale.

2. Das Verfahren nach Anspruch 1, **dadurch gekennzeichnet, dass** die Informationen (DI) über die Dynamik des Fahrzeugs auch Informationen (ERC) über den Straßenzustand oder die äußere Umgebung umfassen.

3. Das Verfahren nach Anspruch 1 oder Anspruch 2, **dadurch gekennzeichnet, dass** die Operation des Analysierens der Informationen (DI) über die Dynamik des Fahrzeugs, um den Beginn eines Ereignisses der Erkennung eines Manövers (mvr) zu identifizieren und eine Prozedur der Erkennung (30) des Ereignisses zu starten (cmd), eine Bewertung eines Überschreitens eines Schwellenwertes durch die Querbeschleunigung ($a_{lat}$) umfasst.

4. Das Verfahren nach Anspruch 1 oder Anspruch 2, **dadurch gekennzeichnet, dass** es eine Operation einer Filterung (120) des Rauschens in den Signalen umfasst, die die erfassten Informationen (DI) über die Dynamik des Fahrzeugs betreffen, insbesondere mittels Tiefpassfilter und/oder Filter mit Vergesslichkeitsfaktor.

5. Das Verfahren nach Anspruch 1 oder Anspruch 2, **dadurch gekennzeichnet, dass** die Operation des Rekonstruierens (140) eines von dem Fahrer ausgeführten Manövers (mvr) durch Berechnung der Komponenten der Verschiebung des Fahrzeugs als Funktion der Informationen über die Dynamik des Fahrzeugs, die in einer Zeitreihe (X, Y) angeordnet sind, ein Rekonstruieren der Verschiebung des Fahrzeugs (TV) als Funktion der Längsgeschwindigkeit ($v_{long}$), der Quergeschwindigkeit ($v_{lat}$) und des Gierwinkels ($\Psi$), um Komponenten ($X_g(t)$, $Y_g(t)$) der Verschiebung als Funktion der Zeit (t) zu erhalten, und auf der Grundlage der Komponenten ($X_g(t)$, $Y_g(t)$) der Verschiebung als Funktion der Zeit (t), eine Berechnung entsprechender Zeitreihen der Verschiebung ($mvr_x$, $mvr_y$) umfasst, die das Manöver (mvr) darstellen.

6. Das Verfahren nach Anspruch 1 oder Anspruch 2, **dadurch gekennzeichnet, dass** die Operation des Identifizierens (150) des durchgeführten Manövers (mvr) das Durchführen des Vergleichs durch Anwendung eines Dynamic-Time-Warping-Verfahrens umfasst, um die Ähnlichkeit zwischen den Zeitreihen der Verschiebung ($mvr_x$, $mvr_y$) und den Modellen von Zeitreihen (tp) zu bewerten, die vorgegebenen gespeicherten Manövern entsprechen.

7. Das Verfahren nach Anspruch 6, **dadurch gekennzeichnet, dass** es die Definition der Bereiche (S1, S2, S3) mittels entsprechender Stilparameter (PAR_MAN1, PAR_MAN2 und PAR_MAN3) umfasst, die die maximale Beschleunigung multiplizieren und einen entsprechenden Zustand maximaler Beschleunigung ($|a|_{max,cmft}$, $|a|_{max,nrm}$, $|a|_{max,sprt}$) für das Beschleunigungsmodul des Fahrzeugs (TV) definieren.

8. Das Verfahren nach Anspruch 7, **dadurch gekennzeichnet, dass** die Kostenfunktionale ($J_{cmft}$, $J_{nrm}$, $J_{sprt}$) als die Zeitkurven von quadratischen radialen Abständen ($d_{cmft}$, $d_{nrm}$, $d_{sprt}$) zwischen Punkten definiert sind, die durch Beschleunigungswerte in der kartesischen Ebene des Manövers (mvr) definiert sind, die durch das Modul des aktuellen Beschleunigungsvektors ($|\bar{a}|$) und die Grenze jeder der drei Mannigfaltigkeiten (S1, S2, S3) definiert sind, die durch das Modul der maximalen Beschleunigung der Mannigfaltigkeiten ($|a|_{max,cmft}$, $|a|_{max,nrm}$, $|a|_{max,sprt}$) definiert sind.

9. Das Verfahren nach Anspruch 1 oder Anspruch 2, **dadurch gekennzeichnet, dass** die Operation des Erkennens (230) des Fahrstils (stl) auf der Grundlage der Kostenfunktionale die Identifizierung des Bereichs umfasst, der der Verteilung der Beschleunigungen am nächsten ist und somit die minimale Kostenfunktionale (J) aufweist, wobei dieser Bereich durch die Kostenfunktionale identifiziert ist, die den kleinsten Wert hat.

10. Das Verfahren nach Anspruch 1 oder Anspruch 2, **dadurch gekennzeichnet, dass** es die Auswahl eines neuen Stils umfasst, wenn eine dem neuen Stil zugeordnete minimale Kostenfunktionale um einen vorgegebenen Betrag (Δ) für ein vorgegebenes Zeitintervall (DT), das insbesondere kalibrierbar ist, niedriger ist als die vorherige.

11. Das Verfahren nach Anspruch 1 oder Anspruch 2, **dadurch gekennzeichnet, dass** es umfasst, das Manöver (mvr) als weiteren Eingangswert für die Operation der Identifizierung der Fahrweise zu verwenden.

12. Das Verfahren nach Anspruch 7, **dadurch gekennzeichnet, dass** es eine Prozedur zur Charakterisierung der Fahrstile (300) umfasst, die die Erfassung von Werten von Informationen (DI) über die Dynamik des Fahrzeugs von Sensoren, die der Ausführung eines bestimmten Satzes von Manövern durch eine Vielzahl von Fahrern entsprechen, das Berechnen von Spektren dieser Werte und von Spitzenfrequenzwerten dieser Spektren, das Auftragen der Frequenzwerte (fp) als Funktion der Geschwindigkeit (v) des Fahrzeugs (TV) und das Definieren von definierten Bereichen (Z1, Z2, Z3) in der Geschwindigkeits-Frequenz-Ebene umfasst, die den Klassen (CL1, CL2, CL3) des Fahrstils entsprechen.

13. Das Verfahren nach Anspruch 7, **dadurch gekennzeichnet, dass** es eine Prozedur zur Charakterisierung der Fahrstile (300) umfasst, die einen Schritt (310) umfasst, der vorsieht, Werte von Informationen (DI) über die Dynamik des Fahrzeugs von Sensoren, insbesondere auch von Sensoren zur Erfassung von Straßen- oder Umgebungsbedingungen (ERC), zu erfassen, die der Ausführung eines bestimmten Satzes von Manövern durch eine Vielzahl von Fahrern entsprechen, und diese Werte zum Kalibrieren (340) der Stilparameter (PAR_MAN1, PAR_MAN2 und PAR_MAN3) in der Weise zu verwenden, dass jeder Bereich (S1, S2, S3) die Verteilung der Beschleunigungen in den Daten so dicht wie möglich annähert, insbesondere den Stilparameter auszuwählen, der die entsprechende Kostenfunktionale minimiert.

14. Vorrichtung zum Erkennen des Fahrstils eines Fahrers eines Landfahrzeugs, die Sensormittel zum Erfassen (110) von Informationen (DI) über die Dynamik des Fahrzeugs von Sensoren umfasst und konfiguriert ist, als Funktion der Informationen über die Dynamik des Fahrzeugs eine Zugehörigkeitsklasse des Fahrstils (stl) des Fahrers zu berechnen, wobei die Vorrichtung **dadurch gekennzeichnet ist, dass** sie ein oder mehrere Mikroprozessormodule (10, 20, 25) umfasst, die konfiguriert sind, die Operationen des Verfahrens nach einem der Ansprüche 1 bis 13 auszuführen.

15. Die Vorrichtung nach Anspruch 14, **dadurch gekennzeichnet, dass** das eine oder die mehreren Mikroprozessormodule (10, 20, 25) als ein oder mehrere Prozessoren des Kraftfahrzeugs (TV) implementiert sind.

16. Die Vorrichtung nach Anspruch 14, **dadurch gekennzeichnet, dass** das eine oder die mehreren Mikroprozessormodule (10, 20, 25) als ein tragbares Computerterminal implementiert sind, das insbesondere einen dreiachsigen Beschleunigungsmesser und einen GPS-Positionsdetektor umfasst.

**Revendications**

1. Procédé permettant de reconnaître le style de conduite d'un conducteur d'un véhicule terrestre, du type qui prévoit d'acquérir (110) des informations (DI) sur la dynamique du véhicule à partir de capteurs et de calculer, en fonction desdites informations (DI) sur la dynamique du véhicule, une classe d'appartenance du style de conduite (stl) du conducteur, ledit procédé étant **caractérisé en ce qu'**il comprend :

   - l'analyse (130) desdites informations (DI) sur la dynamique du véhicule afin d'identifier le début d'un événement de reconnaissance d'une manœuvre (mvr) et de commencer (cmd) une procédure (130) de reconnaissance de l'événement, qui comprend :
   - la reconstruction (140) d'une manœuvre (mvr) effectuée par le conducteur en calculant des composantes de déplacement du véhicule ($X_g(t)$, $Y_g(t)$) en fonction des informations sur la dynamique du véhicule (DI) agencées dans une série chronologique de déplacement ($mvr_x$, $mvr_y$) qui représente une reconstruction de ladite manœuvre (mvr) ;
   - l'identification (150) de la manœuvre effectuée (mvr) en comparant ladite série chronologique de déplacement ($mvr_x$, $mvr_y$) avec des modèles (tp) de séries chronologiques correspondant à des manœuvres prédéterminées stockées dans une base de données, en particulier en appliquant une procédure d'alignement temporel dynamique ;
   - la définition (210) de régions, en particulier des variétés, (S1, S2, S3), dans un plan cartésien ayant comme axes une accélération latérale ($a_{lat}$) et une accélération longitudinale ($a_{long}$) comprises dans lesdites informations (DI) sur la dynamique du véhicule ;

- le calcul (220) de fonctions de coût ($J_{cmft}$, $J_{nrm}$, $J_{sprt}$) pour trois styles de conduite, qui calculent une distance entre des points définie par des valeurs d'accélération dans ledit plan cartésien de ladite manœuvre (*mvr*) et la limite de chacune de trois régions (S1, S2, S3) respectives ;
- la reconnaissance (230) du style de conduite (*stl*), sur la base desdites fonctions de coût.

2. Procédé selon la revendication 1, **caractérisé en ce que** lesdites informations (DI) sur la dynamique du véhicule comprennent également des informations (ERC) sur la condition routière ou un environnement externe.

3. Procédé selon la revendication 1 ou la revendication 2, **caractérisé en ce que** ladite opération consistant à analyser lesdites informations (DI) sur la dynamique du véhicule afin d'identifier le début d'un événement de reconnaissance d'une manœuvre (*mvr*) et de commencer (cmd) une procédure de reconnaissance (30) de l'événement comprend l'évaluation d'un dépassement d'une valeur de seuil par l'accélération latérale ($a_{lat}$).

4. Procédé selon la revendication 1 ou la revendication 2, **caractérisé en ce qu'**il comprend une opération consistant à filtrer (120) le bruit dans les signaux concernant lesdites informations (DI) acquises sur la dynamique du véhicule, en particulier via des filtres passe-bas et/ou des filtres avec un facteur d'oubli.

5. Procédé selon la revendication 1 ou la revendication 2, **caractérisé en ce que** ladite opération consistant à reconstruire (140) une manœuvre (*mvr*) effectuée par le conducteur en calculant des composantes de déplacement du véhicule en fonction des informations sur la dynamique du véhicule agencées dans une série chronologique (X, Y) comprend la reconstruction du déplacement du véhicule (TV) en fonction de la vitesse longitudinale ($v_{long}$), la vitesse latérale ($v_{lat}$), et l'angle de lacet ($\Psi$), pour obtenir des composantes ($X_g(t)$, $Y_g(t)$) du déplacement en fonction du temps (*t*) et le calcul, sur la base desdites composantes ($X_g(t)$, $Y_g(t)$) du déplacement en fonction du temps (*t*), de séries chronologiques de déplacement ($mvr_x$, $mvr_y$) correspondantes qui représentent la manœuvre (*mvr*).

6. Procédé selon la revendication 1 ou la revendication 2, **caractérisé en ce que** ladite opération consistant à identifier (150) la manœuvre (*mvr*) effectuée comprend la réalisation de ladite comparaison en appliquant une procédure d'alignement temporel dynamique pour évaluer la ressemblance entre lesdites séries chronologiques de déplacement ($mvr_x$, $mvr_y$) dans lesdites modèles de séries chronologiques (tp) correspondant à des manœuvres stockées prédéterminées.

7. Procédé selon la revendication 6, **caractérisé en ce qu'**il comprend la définition desdites régions (S1, S2, S3) au moyen de paramètres de style (*PAR_MAN*1, *PAR_MAN*2, et *PAR_MAN3*) respectifs qui multiplient l'accélération maximale et définissent une condition correspondante d'accélération maximale ($|a|_{max,cmft}$, $|a|_{max,nrm}$, $|a|_{max,sprt}$) pour le module de l'accélération du véhicule (TV).

8. Procédé selon la revendication 7, **caractérisé en ce que** lesdites fonctions de coût ($J_{cmft}$, $J_{nrm}$, $J_{sprt}$) sont définies comme les courbes temporelles de distances radiales quadratiques ($d_{cmft}$, $d_{nrm}$, $d_{sprt}$) entre des points définis par des valeurs d'accélération dans ledit plan cartésien de ladite manœuvre (*mvr*) qui sont définies par le module du vecteur d'accélération courant ($|\bar{a}|$) et la limite de chacune des trois variétés (S1, S2, S3), définie par le module de l'accélération maximale des variétés ($|a|_{max,cmft}$, $|a|_{max,nrm}$, $|a|_{max,sprt}$).

9. Procédé selon la revendication 1 ou la revendication 2, **caractérisé en ce que** ladite opération consistant à reconnaître (230) le style de conduite (*stl*) sur la base desdites fonctions de coût comprend l'identification de la région qui est la plus proche de la distribution des accélérations et donc présentant la fonction de coût minimale (*J*), ladite région étant identifiée par la fonction de coût qui a la valeur minimale.

10. Procédé selon la revendication 1 ou la revendication 2, **caractérisé en ce qu'**il comprend la sélection d'un nouveau style si une fonction de coût minimale associée au nouveau style est inférieure à la précédente d'une quantité ($\Delta$) donnée pour un intervalle de temps (DT) donné, qui est en particulier étalonnable.

11. Procédé selon la revendication 1 ou la revendication 2, **caractérisé en ce qu'**il comprend l'utilisation de la manœuvre (*mvr*) comme valeur d'entrée supplémentaire pour l'opération consistant à identifier le style de conduite.

12. Procédé selon la revendication 7, **caractérisé en ce qu'**il comprend une procédure de caractérisation des styles de conduite (300), qui inclut l'acquisition de valeurs d'informations (DI) sur la dynamique du véhicule à partir de capteurs correspondant à une exécution par une pluralité de conducteurs d'un ensemble donné de manœuvres, le calcul de spectres desdites valeurs et de valeurs de fréquence de crête desdits spectres, le relevé desdites valeurs de fréquence (fp) en fonction de la vitesse (v) du véhicule (TV), et la définition dans le plan vitesse-fréquence ainsi défini de régions (Z1, Z2, Z3) correspondant à des classes (CL1, CL2, CL3) de style de conduite.

13. Procédé selon la revendication 7, **caractérisé en ce qu'**il comprend une procédure de caractérisation des styles de conduite (300), qui inclut une étape (310) qui prévoit l'acquisition de valeurs d'informations (DI) sur la dynamique du véhicule à partir de capteurs, en particulier également des capteurs permettant de détecter des conditions routières ou environnementales (ERC), correspondant à une exécution par une pluralité de conducteurs d'un ensemble donné de manœuvres, et l'utilisation desdites valeurs pour étalonner (340) lesdits paramètres de style (*PAR_MAN*1*, PAR_MAN2,* et *PAR_MAN3*) de telle manière que chaque région (S1, S2, S3) se rapproche aussi près que possible de la distribution des accélérations dans lesdites données, en particulier une sélection du paramètre de style qui réduit au minimum la fonction de coût respective.

14. Appareil permettant de reconnaître le style de conduite d'un conducteur d'un véhicule terrestre, comprenant des moyens capteurs permettant d'acquérir (110) des informations (DI) sur la dynamique du véhicule à partir de capteurs et configurés pour calculer, en fonction desdites informations sur la dynamique du véhicule, une classe d'appartenance du style de conduite *(stl)* du conducteur, ledit appareil étant **caractérisé en ce qu'**il comprend un ou plusieurs modules microprocesseurs (10, 20, 25) configurés pour mener à bien les opérations du procédé selon l'une quelconque des revendications 1 à 13.

15. Appareil selon la revendication 14, **caractérisé en ce que** lesdits un ou plusieurs modules microprocesseurs (10, 20, 25) sont mis en œuvre via un ou plusieurs processeurs du véhicule à moteur (TV).

16. Appareil selon la revendication 14, **caractérisé en ce que** lesdits un ou plusieurs modules microprocesseurs (10, 20, 25) sont mis en œuvre via un terminal d'ordinateur portable, en particulier comprenant un accéléromètre triaxial et un détecteur de position GPS.

Fig. 1

Fig. 2

Fig. 3

Fig. 4

Fig. 5

tp

WP

mvr

Fig. 6

$a_{long}$

$|a|_{max,sprt}$

$|a|_{max,cmft}$

$|a|_{max,nrm}$

$a_{lat}$

Fig. 7

$a_{long}$

$d_{nrm}$  $d_{sprt}$

$d_{cmft}$

$a_{lat}$

Fig. 8

Fig.9

EP 3 498 559 B1

Fig. 10

Fig. 11

Fig. 12

EP 3 498 559 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017088128 A1

- US 2010023223 A1

**Non-patent literature cited in the description**

- Performance Comparison of Dynamic Time Warping (DTW) and a Maximum Likelihood (ML) Classifier in Measuring Driver Behavior with Smartphones. **ENGELBRECHT et al.** IEEE SYMPOSIUM SERIES ON COMPUTATIONAL INTELLIGENCE. IEEE, 2015, 427-433
- **AYA HAMDY et al.** Recognizing Driving Behavior and Road Anomaly using Smartphone Sensors. *INTERNATIONAL JOURNAL OF AMBIENT COMPUTING AND INTELLIGENCE,* 01 July 2017, vol. 8 (3), 22-37

- **STAN SALVADOR ; PHILIP CHAN.** Toward accurate dynamic time warping in linear time and space. *Intell. Data Anal.,* October 2007, vol. 11 (5), 561-580
- **R. LAMM ; B. PSARIANOS ; T. MAILAENDER.** Highway Design and Traffic Safety Engineering Handbook. McGraw-Hill, 1999